# EUROPÄISCHE PATENTANMELDUNG

(11) **EP 0 616 122 A1**
(43) Veröffentlichungstag der Anmeldung: **21.09.1994**
(21) Anmeldenummer: 93104558.7
(22) Anmeldetag: 19.03.1993
(51) Int. Cl.: F02D 41/22, F02D 41/14

(54) **Verfahren zur Auswertung von Messwerten eines Sensors im Abgastrakt einer Brennkraftmaschine**

(71) Anmelder: SIEMENS AKTIENGESELLSCHAFT, D-80333 München (DE)
(72) Erfinder: Gerblinger, Josef, Dr. Dipl.-Phys., W-8900 Augsburg (DE); Meixner, Hans, Prof.Dr. Dipl.-Phys., W-8013 Haar (DE); Schrey, Ulrich, Dr. Dipl.-Phys., W-8400 Regensburg (DE)

(57) **Zusammenfassung**

Bei einer Brennkraftmaschine ist im Abgastrakt eine das Abgasgemisch sensierende Sonde angeordnet, die einen Meßwert liefert, der einem Lambdawert zugeordnet werden kann, der in einer Auswerte- und Steuereinheit ASE abgelegt ist. Aufgabe der Erfindung ist es, Zündaussetzer und Einspritzaussetzer zu erkennen. Dazu wird die an der Sonde anliegende Spannung ausgewertet. Liegt die an der Sonde abgegriffene Spannung außerhalb der Bandbreite eines für die Brennkraftmaschine vorgegebenen Meßwertes im oberen Bereich, so wird in der Auswerte- und Steuereinheit auf einen Einspritzaussetzer erkennt. Liegt dagegen der Meßwert außerhalb der Bandbreite bei einem niedrigeren Spannungswert, so wird auf einen Zündaussetzer erkannt. Anwendbar bei Brennkraftmaschinen.

## Beschreibung

Die Erfindung betrifft ein Verfahren zur Auswertung von Meßwerten eines im Abgastrakt einer Brennkraftmaschine angeordneten zumindest einen das Abgasgemisch sensierenden Sensors.

Eine der wichtigsten Forderungen des Gesetzgebers an die Herstellung von Kraftfahrzeugen besteht darin, Fehlzündungen von Verbrennungsmotoren zu detektieren und zu vermeiden. Dies hat mehrere Gründe. Öffnet sich nach einer nichtstattgefundenen Verbrennung das Auslaßventil eines Zylinders, so strömt neben der Luft unverbrannter Kraftstoff aus, der bei einem gegebenenfalls vorhandenen Katalysator auf dessen Oberfläche nachverbrennt. Hierbei entstehen Temperaturen, die in der Regel zur Zerstörung des Katalysators führen können. Ist in der Abgasanlage eines Kraftfahrzeugs kein Katalysator vorhanden, so gelangen die unverbrannten Kraftstoffe unmittelbar in die Umgebungsluft des Fahrzeugs und steigern somit in erheblichem Maße die Luftverschmutzung. Da während der Auslaßphase nicht das gesamte Gemisch aus Luft und Kraftstoff aus dem Zylinder strömt, findet im Arbeitsgang nach einer nicht erfolgten Verbrennung eine erheblich stärkere, unkontrollierte Umsetzung des Kraftstoffs statt. Dies führt sowohl zu thermischen Belastungen von Zylinderwand und Kolbenboden als auch zu mechanischen Belastungen des Pleuels, der Kolbenringe und der Kurbelwelle.

Zum Nachweis von Fehlzündungen in Brennkraftmaschinen werden bisher zwei unterschiedliche Verfahren verwendet.

Ein erstes Verfahren besteht darin, Fehlzündungen über Drehzahlschwankungen der Brennkraftmaschine nachzuweisen. Selbst bei Verwendung von Drehzahlsensoren mit extrem hoher Auflösung führt dieses Prinzip nur bei Brennkraftmaschinen mit maximal vier Zylindern zu einigermaßen befriedigenden Ergebnissen und dies auch nur dann, wenn sich das Kraftfahrzeug auf ebener Fahrbahn bewegt. Unruhige Fahrbahnen (z.B. Schlaglöcher) führen analog den Fehlzündungen ebenfalls zu Drehzahlschwankungen der Brennkraftmaschine. Die Einflüsse von Fahrbahn und Fehlzündungen auf die Drehzahl können jedoch durch die Kombination eines Beschleunigungssensors mit dem Drehzahlsensor eliminiert werden. Dies wiederum führt zu einer wesentlichen Verteuerung des ganzen Systems.

Ein zweites Verfahren zur Detektierung von Fehlzündungen besteht darin, den Zylinderdruck direkt durch einen Drucksensor für den Verbrennungsraum oder indirekt über eine piezoelektrische Beilagscheibe unter der Zündkerze zu messen. Der Nachteil dieser Zylinderdruckmessung besteht darin, daß sie verhältnismäßig teuer ist.

Im Gegensatz zu Zündaussetzern haben Einspritzaussetzer bei den Einspritzventilen keine negativen Auswirkungen auf den Katalysator, da durch die dadurch bedingte fehlende Kraftstoffzufuhr keine Nachverbrennungen im Katalysator entstehen können. Einspritzaussetzer wirken sich jedoch u.a. auf den Rundlauf und die Leistung der Brennkraftmaschine ungünstig aus, so daß es ebenfalls wünschenswert ist, Einspritzaussetzer zu erkennen.

Es ist daher Aufgabe der Erfindung, Zündaussetzer und Einspritzaussetzer bei einer Brennkraftmaschine auf einfache Weise ohne die oben beschriebenen Nachteile zu erkennen.

Die Aufgabe wird erfindungsgemäß durch den Patentanspruch 1 gelöst. Vorteilhafte Weiterbildungen sind in den Unteransprüchen gekennzeichnet.

Durch das Verfahren nach der Erfindung wird wie üblich die Spannung am Sensor gemessen und in einer Auswerte- und Steuereinheit (Motorsteuerung) ausgewertet. Dabei ist die Auswerte- und Steuereinheit jedoch so ausgebildet, daß sie Meßwerte des Sensors nach Überschreiten einer vorgegebenen Bandbreite entweder Zündaussetzern oder Einspritzaussetzern zuordnet und dann aufgrund dieser Aussetzer entsprechende Maßnahmen einleiten kann. Im Fall von sich wiederholenden Zündaussetzern beispielsweise beim ersten Zylinder der Brennkraftmaschine kann eine Maßnahme beispielsweise darin bestehen, die Kraftstoffzufuhr für diesen Zylinder zu unterbrechen.

Für die Genauigkeit der Messung ist es zweckmäßig, den Sensor möglichst nahe am zylinderseitigen Anfang der Abgasleitungen anzuordnen.

So besteht eine Möglichkeit darin, einen Sensor unmittelbar stromabwärts hinter den zusammengeführten Zylinderabgasleitungen anzuordnen, wobei eine Zuordnung zu den einzelnen Zylindern beispielsweise durch ein Triggersignal aufgrund der Zündung oder der Kurbelwellenstellung vorgenommen werden kann.

Eine weitere Möglichkeit besteht darin, jeweils einen Sensor unmittelbar in die Abgasleitung jedes einzelnen Zylinders vor der Zusammenführung der Abgasleitungen anzuordnen, wodurch die Meßgenauigkeit erhöht werden kann, da jeweils nur ein sogenanntes Abgaspaket vorhanden ist, das ausgewertet wird.

Als Sensoren eignen sich insbesondere schnelle Sensoren wie Sauerstoffsensoren auf der Basis gesputterter Strontiumtitanat-Schichten, die temperaturkompensiert sind.

Die Erfindung sei nun anhand von vier Figuren näher erläutert.

Es zeigen:
Fig. 1 eine prinzipielle Meßschaltung;
Fig. 2 ein Flußdiagramm zur Erläuterung des erfindungsgemäßen Verfahrens;
Fig. 3 eine Kennlinie des Meßsignals U in Abhängigkeit von Lambda; und
Fig. 4 eine schematische Darstellung einer Anordnung einer Auswerte- und Steuereinheit und eines Sensors in einer Brennkraftmaschine.

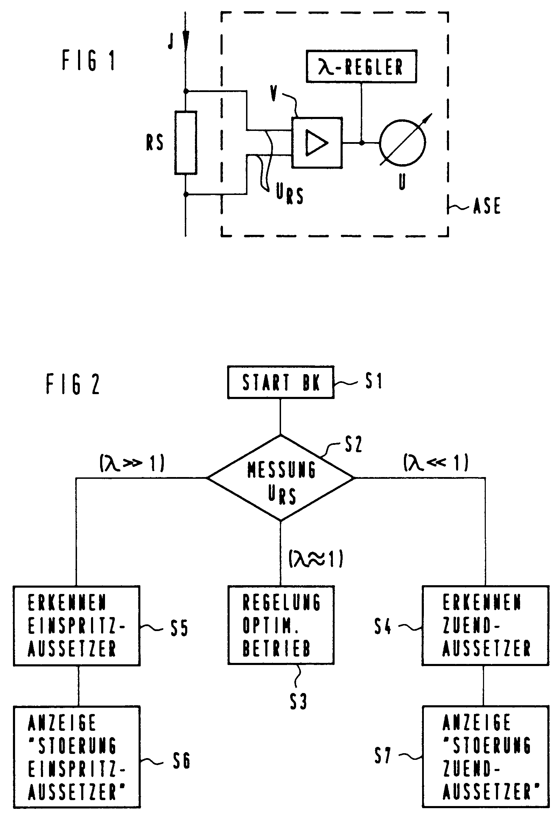

Fig. 1 zeigt eine prinzipielle Meßschaltung für den Sensor. Der Widerstand RS soll den Widerstand des Sensors andeuten, der vom Strom I durchflossen ist und dadurch auf einen gewissen Wert aufgeheizt wird. Der Widerstand RS ist dem Abgas der Brennkraftmaschine ausgesetzt. Die abgegriffenen Spannung U_{RS} wird einer Spannungsverstärkerschaltung V zugeführt, die den abgegriffenen Spannungswert U_{RS} verstärkt, um somit zu weiterverarbeitbaren Spannungsawerten U zu gelangen. Ein Lambda-Regler nimmt bei einem vorgegebenen Lambda-Wert für die Brennkraftmaschine entsprechende Änderungen der Luft- oder Kraftstoffzufuhr vor. Durch die gestrichelte Linie ASE ist eine Auswerte- und Steuerschaltung angedeutet, die eine Motorsteuerung sein kann.

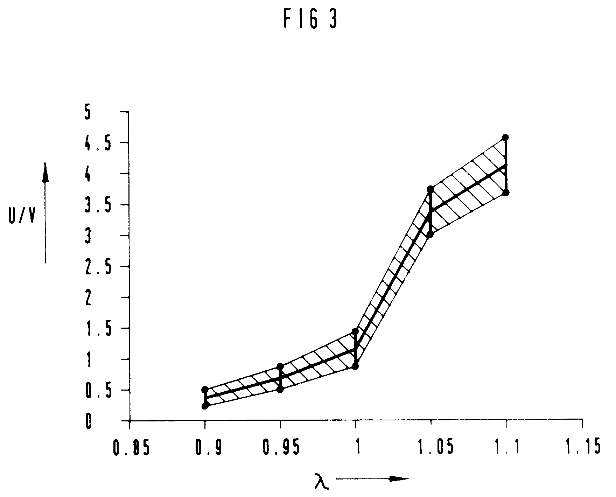

Das in Fig. 2 gezeigte Flußdiagramm zeigt den Verfahrensablauf für einen angenommenen Wert für λ = 1. Nach dem Starb der Brennkraftmaschine im Schritt S1 wird der Meßwert in einem Schritt S2 in der Auswerte- und Steuereinheit ASE ausgewertet. Entspricht die Spannung U (Fig. 1) dem Meßwert 1,2 V (Fig. 3), so wird eine Regelung der Brennkraftmaschine für den normalen Betrieb im Schritt S3 vorgenommen. Beträgt die gemessene Spannung dagegen beispielsweise 4,2 V, so entspricht dieser Wert einem Lambda von 1,1, d.h., das Gemisch ist mager und es wird auf einen Einspritzaussetzer im Schritt S4 erkannt, der beispielsweise in einem weiteren sich darananschließenden Schritt S6 angezeigt werden kann.

Wenn dagegen die gemessene Spannung beispielsweise U = 0,4 V beträgt, so liegt der zugeordnete Lambdawert bei 0,9, wodurch im Schritt S5 auf einen Zündaussetzer erkannt wird, was in einem weiteren Schritt S7 angezeigt werden kann.

Fig. 3 zeigt den Zusammenhang zwischen der nach dem Verstärker gemessenen Spannung U des Sensors und λ. Der gestrichelte Bereich zeigt den Toleranzbereich für die Meßwerte. So kann beispielsweise der Meßwert U für λ = 1 zwischen 0,9 V und 1,5 V liegen. Diese Toleranzbreite wird als Bandbreite für den Wert λ = 1 bezeichnet. Wenn die Spannung andererseits beispielsweise bei 0,4 V liegt, so entspricht dies einem Wert λ = 0,9, d.h. das Gemisch ist fett. In diesem Fall wird auf einen Zündaussetzer erkannt.

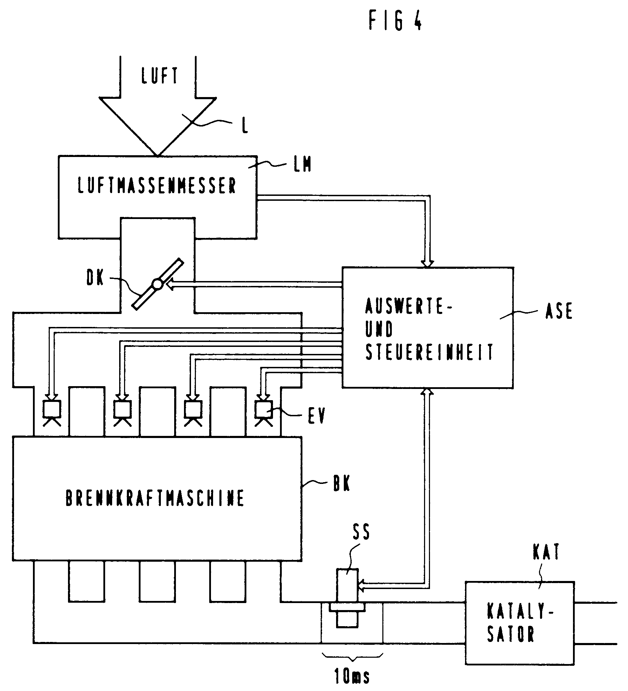

Die in Fig. 4 gezeigte Anordnung zeigt schematisch eine Brennkraftmaschine BK, die mit Luft L und Kraftstoff über eine Drosselklappe DK versorgt wird, wobei die angesaugte Luftmasse in einem Luftmassenmesser LM gemessen wird. Die Einspritzventile sind mit EV bezeichnet. Abgasseitig ist unmittelbar hinter den zusammengeführten Abgasleitungen eine Sauerstoffsonde SS angeordnet, an der eine Spannung abgreibar ist, die einem Lambdawert zugeordnet werden kann, wie in Fig. 3 gezeigt ist. Im weiteren Verlauf des Abgastraktes ist ein Katalysator KAT angeordnet. Die einzelnen Meßwerte werden einer Auswerte- und Steuereinheit ASE zugeleitet, die dann die entsprechend vorgegebenen Maßnahmen einleitet.

## Patentansprüche

1. Verfahren zur Auswertung von Meßwerten eines im Abgastrakt einer Brennkraftmaschine (BK) angeordneten zumindest einen das Abgasgemisch sensierenden Sensors (SS), wobei der zumindest eine Sensor im Bereich des aus dem/den Zylindern ausstömenden Abgases angeordnet sind und der auszuwertende durch den zumindest einen Sensor gelieferte Meßwert einer Auswerte- und Steuereinheit (ASE) zugeführt wird, wobei ein für die Brennkraftmaschine speziell festgelegter Lamba-Wert innerhalb einer vorgegebenen Bandbreite in der Auswerte- und Steuereinheit abgelegt ist, und wobei
a) die Auswerte- und Steuereinheit auf zumindest einen Zündaussetzer zumindest eines Zylinders erkennt, wenn der Meßwert für das Abgasgemisch die vorgegebene Bandbreite in Richtung eines fetten Gemisches überschreitet;
b) die Auswerte- und Steuereinheit auf zumindest einen Einspritzaussetzer zumindest eines Zylinders erkennt, wenn der Meßwert für das Abgasgemisch die vorgegebene Bandbreite in Richtung eines mageren Gemisches überschreitet; und
c) der Meßwert, wenn er innerhalb der vorgegebenen Bandbreite liegt, zur optimalen Einstellung des Kraftstoff-Luftverhältnisses verwendet wird.

2. Verfahren nach Anspruch 1, dadurch gekennzeichnet, daß der Bereich zur Anordnung des Sensors durch den Bereich unmittelbar stromabwärts hinter den einzelnen zusammengeführten Zylinder-Abgasleitungen gebildet ist (Fig. 4).

3. Verfahren nach Anspruch 1, dadurch gekennzeichnet, daß der Bereich zur Anordnung des Sensors durch den Bereich der einzelnen Abgasleitungen vor der zusammengeführten Abgasleitung gebildet wird, wobei jedem Zylinderausgang ein Sensor zugeordnet wird.

4. Verfahren nach Anspruch 1 und 2, dadurch gekennzeichnet, daß die der Auswerte- und Steuereinrichtung zugeführten Meßwerte in der Auswerte- und Steuereinheit den einzelnen Zylindern zugeordnet werden.

5. Verfahren nach Anspruch 4, dadurch gekennzeichnet, daß die Zuordnung über eine die aktuelle Lage der Brennkraftmaschine detektierenden Einrichtung (Kurbelwelle, Zündung) durch ein an die Auswerte- und Steuereinrichtung abgegebenes Triggersignal vorgenommen wird.

6. Verfahren nach Anspruch 1, dadurch gekennzeichnet, daß der Sensor durch zumindest einen schnell ansprechenden Sensor gebildet wird, der im Bereich des aus den Zylindern ausströmenden Abgases angeordnet ist.

7. Verfahren nach Anspruch 1 und 6, dadurch gekennzeichnet, daß der Sensor durch einen Sauerstoffsensor gebildet wird.

8. Verfahren nach Anspruch 7, dadurch gekennzeichnet, daß der Sauerstoffsensor durch einen resistiven Sauerstoffsensor (z.B. Strontiumtitanat) gebildet ist, der in Dick- und/oder Dünnschichttechnologie realisiert ist.

9. Verfahren nach Anspruch 1 oder 7 und 8, dadurch gekennzeichnet, daß der Sensor temperaturkompensiert ist.
